Europäisches Patentamt

European Patent Office

Office européen des brevets

(19)

(11) Publication number:

**0 332 555**
**A2**

## EUROPEAN PATENT APPLICATION

(12)

(21) Application number: **89480003.6**

(22) Date of filing: **03.01.89**

(51) Int. Cl.⁴: **G 06 F 15/40**

(30) Priority: **08.03.88 US 165333**

(43) Date of publication of application:
**13.09.89 Bulletin 89/37**

(84) Designated Contracting States: **DE FR GB IT**

(71) Applicant: **International Business Machines Corporation
Old Orchard Road
Armonk, N.Y. 10504 (US)**

(72) Inventor: **Barker, Barbara A.
Round Rock Williamson County 2800 Carmel Drive
Texas 78664 (US)**

**Edel, Thomas R.
9410 Topridge Drive
Travis County Texas 78750 (US)**

**Stark, Jeffrey A.
2905 Valleyview Drive
Grapevine Texas 76051 (US)**

(74) Representative: **Tubiana, Max
Compagnie IBM France Département de Propriété
Industrielle
F-06610 La Gaude (FR)**

(54) Shell structure for management and processing of data stream constructs.

(57) Application independent processing of data stream constructs permits meaningful and precise management of a data stream in a digital communications network. Data stream clutter is reduced and end user formatting is rendered more flexible by embedding tags in the data stream to a point in one or more shells accessible by the end user's work station. An application program is simplified by not applying rigid constraints to operators. All end user requirements for formatting, calls for routines to process information and the like are resident at the end user's work station, all embedded in a shell. The shell is easily tailorable by the end user, and the application data stream is significantly diminished in size since tags in the data stream point to the shell.

EP 0 332 555 A2

**Description**

## SHELL STRUCTURE FOR MANAGEMENT AND PROCESSING OF DATA STREAM CONSTRUCTS

### BACKGROUND OF THE INVENTION

### Field of the Invention

The present invention generally relates to digital communications and, more particularly, to the management and processing of data stream constructs in a manner that achieves meaningful and precise management of the data stream independent of the application program which generated the data stream. The invention provides a data stream architecture that allows a high degree of flexibility in passing document data, formatting information and resources from one application program to another yet results in a significant reduction in data stream clutter.

### Description of the Prior Art

The management of a data stream in a digital communications network, such as a local area network (LAN) or larger teleprocessing networks, presents many problems, particularly where the data streams generated at various terminals or workstations operating with a variety of application programs generate data streams which have different control characters and protocols. To better understand the problem, consider a hypothetical teleprocessing network supporting communications between two or more end users. The end users may be an application program, a storage device or an operator at a display terminal. Serving the end users are a set of communications functions dealing with the language, including formatting, translation and/or editing, dialogue disci pline to control data flow, transmission control including flow rate control and sequence control, and transportation including passage of signals through a more or less complex transmission network between addressable units.

Systems Network Architecture (SNA) defines sets of communications related functions that are distributed throughout a network. It also defines the formats and protocols that relate these distributed functions to one another. An SNA network is highly transparent; i.e., any bit stream is allowed and the end users are not concerned with network topology, route selection or media used. A session is defined as a temporary logical connection between network addressable units for an exchange of messages in accordance with a set of SNA functions devoted to that session. The SNA network thus provides sets of distributed services to facilitate dialogues between pairs of users. The SNA services are organized into layers so that functions that are logically independent may be designed, implemented and invoked independently. An end user can use concurrent sessions to communicate with other end users at multiple network addresses.

As mentioned, an end user in an SNA network may be an application program, an operator of an input/output (I/O) device, or a storage medium. The most general form of end user is an application program. The interaction between a program and an SNA network includes data exchange and/or interchange and the occasional exchange of commands and indicators for control of SNA functions. Different application programs on an SNA network typically generate data streams unique to the program. While the SNA network architecture facilitates the communication between end users in the network, if the end users are applications generating incompatible data streams, meaningful communication will not be achieved. As used herein, a data stream is a collection of structured fields and is defined by the syntax and semantics of the structured fields. By syntax, what is meant is the way in which the structured fields and parameters are grouped independent of their meaning or the manner of their interpretation and use. By semantics, what is meant is the meaning of the structured fields and parameters independent of their interpretation and use. The data stream is interpreted to generate a visual or conceptual entity such as a document. A document, in turn, is composed of pages, data objects, resources and commands, and is in either revision, presentation or resource data format.

As but one example, text processing applications generate data streams which have embedded formatting and textual commands. These commands typically vary from one application program to another. Revisable Format Text Document Content Architecture (RFTDCA) was developed to provide for the interchange of data streams from different text processing applications and to allow for the consistent interpretation of embedded formatting and textual commands.

The International Standards Organization (ISO) has defined standards for document processing and interchange. Specifically, the Standard Generalized Markup Language (SGML), publication 8879, and Office Document Architecture/Office Document Interchange Facility (ODA/ODIF), publication 8613, are two such standards. SGML is a representation language for character text and can be used to define the specifications for publishing systems. Generic markup, that is, identification of the role of document elements rather than how to present those elements, is the basis of SGML. SGML is also used to interchange text documents, but since non-text data, such as scanned images and graphics, can coexist with text data in a document, the

EP 0 332 555 A2

requirement to interchange documents containing non-text data is not totally addressed by SGML. This requirement is more appropriately handled by ODA.

ODA is a method of describing document structures and all types of text and non-text information that are to be included in a document. This structured description is referred to as an architecture, and the representation of the document is in a form suitable for interchange. The encoding of ODA for interchange is defined in a serial form which is a data stream. An ODA document can contain scanned images and graphics data as well as character text integrated into one consistent data stream.

ODA allows for control of the formatting process, not by embedding formatting commands, but by specifying attributes called layout and presentation directives, that are associated with objects defined by the document structure description. These directives are grouped together to form layout and presentation styles which, in turn, can be referenced by one or more objects in the document structure. ODA styles can be local or external to a document, but the interpretation of style attributes and values is explicitly controlled by the ODA standard. There is no explicit link from a point in an ODA data stream to a location in a style specification. The creator of an ODA document can augment the style specification by embedding user defined attribute names and values within the ODA object descriptions. User defined attributes specify application dependent function that is to be applied to an ODA object during the document processing phase. This information is meaningful only within the creating application, and not interpretable by an arbitrary end user.

Interleaf, Xerox Ventura Publisher and Microsoft Word are examples of editing applications that use style sheets rather than embedded controls or commands to control formatting and layout. This method can be unwieldly because, once properties are assigned to the content of a document, making systematic, global changes becomes tedious and difficult. Also, changes to style sheets can only be made within the application that created the document. Ventura Publisher has a strong import facility that accepts a diversity of file formats generated by text pro cessing applications. These files are imported raw into Ventura where detailed formatting is performed as a postprocessing task based on a style sheet chosen by the operator initiating the file import task. Default style sheets are stored separately in both Ventura Publisher and Microsoft Word, and can be accessed by multiple documents from within the Ventura and Word applications. Word documents normally contain a local style sheet that can be edited if the operator wants each document to have a different style sheet. In both applications, style sheet customization is available only from within the application program, and there are no explicit references from a point in a document to a location in the style sheet. The only end user who can modify a style sheet is an end user of either Ventura Publisher or Microsoft Word.

Moreover, the data streams produced under either the ISO standards or by application program products in general tend to be complex due to a desire to accommodate as many anticipated formatting requirements as possible. Consider, for example, a spreadsheet application program. Intercell and row and column processing requirements differ with each operator. Designing an application program to handle all possible wants necessarily results in an extremely cluttered data stream. What is needed is a data stream architecture that is uncluttered yet permits compatible communication among diverse application programs in a network. More specifically, a mixed object document content architecture is preferred to allow documents to be interchanged among diverse products in order to process the data in the documents in a consistent manner. Within such a mixed object document content architecture, what is needed is a data stream standard that unburdens the data stream of the various formatting commands thereby simplifying the data stream architecture and facilitating a more compatible document data interchange.


## SUMMARY OF THE INVENTION

It is therefore an object of the present invention to provide a digital communications interchange environment wherein transmission efficiency is improved.

It is another object of the invention to provide a data stream architecture which separates the functions of building a data stream and managing the data stream, thereby making the management of the data stream application an independent function.

According to the invention, a structured shell is defined that specifies how to manage and process tagged constructs or elements that are independent of the data content but that can appear concurrently with the data in a data stream representation of a document created by an editor or other similar application. By construct, what is meant is something that has been built; i.e., a structured element in the data stream. The shell structure is separate from the data stream, can be transmitted independently and can be stored in any form recognized by the network.

The invention includes a tag element (TLE) function that links constructs in a data stream by referencing named constructs in a shell. The named shell construct specifies the rules, relationships, and formatting information either directly or indirectly that govern the processing and management of the data stream construct containing the reference. Additionally, the TLE function is used to associate data content with the tagged construct. Explicit association is possible by providing an internal or external reference to a data object envelope that contains the desired content information, or content generating expression that describes how to determine the desired content information. Implicit association occurs when the data object envelope immediately follows the tagged construct sequentially in the data stream. If the TLE contains a reference to a content generating expres sion, the expression must be evaluated in order to determine the associated data

3

content. The TLE can also be used to specify one or more attributes and declared values that override, if the end user has not specified otherwise, the specifications in the shell for either itself or for nested tagged constructs. In addition to format descriptors and directives, the syntax of attributes and the set of permitted attribute values can be contained directly in the shell, referenced from the shell, or referenced from the TLE. References from the shell or TLE can be to a macro, procedure, resource object, or other such contruct that specifies formatting information. The constructs referenced can be contained in the same shell or in another shell, and they can include references to other contructs. References from the TLE temporarily replace their respective counterparts in the shell. The duration of the replacement equals the duration of the scope of the tagged construct. The scope of a tagged construct is determined by the hierarchical position of the referenced named construct in the shell. The shell is structured like a tree with each named construct being a node in the tree. Nodes are nested, and the nesting level determines a scope for the named construct represented by the node.

If a tagged construct is encountered while processing a data stream, the following actions occur. First, the shell construct name reference is resolved, and management information and processing rules are retrieved. Resolution may involve one or more shell structures. Parameters included with the tagged construct are then checked for modifications or additions to specifications in the shell. If changes are not specified, management information is interpreted and processing rules executed and the result is applied to the data content associated with the tagged construct. If changes are specified and the end user has not customized the shell named construct, then all referenced management information and processing rules are resolved, and the result is applied as specified in the previous step. Examples of applications designed to follow the above steps are interactive or batch editors or document formatters, parsers, and interchange data stream interpretors.

## BRIEF DESCRIPTION OF THE DRAWINGS

The foregoing and other objects, aspects and advantages of the invention will be better understood from the following detailed description of a preferred embodiment of the invention with reference to the drawings, in which:

Figure 1 is a block diagram showing the relation of the several architectures which define a data stream;

Figure 2 is a functional block diagram illustrating the component hierarchy of a mixed object document control architecture which constitutes the preferred environment of the present invention;

Figure 3 is an illustration of page elements of a page within a document described by a data stream;

Figure 4 is a block diagram illustrating the creation of a shell structure according to the invention;

Figure 5 is a block diagram showing a sample data stream sent to a device via a communication link and illustrates how processing of the tags is to occur by resolution of the reference links from the tag names in the data stream to their respective named constructs in a shell structure;

Figure 6 is a block diagram which shows the interchange of a shell structure between two devices in a network;

Figure 7 is a block diagram illustrating the initiation of a shell structure tailoring process for the shell structure of Figure 6;

Figure 8 is a block diagram illustrating the customization of the shell structure shown in Figure 7;

Figure 9 is a block diagram which shows the processing of tags using the shell customized by the end user in Figure 8; and

Figure 10 is a flow chart showing the logic of a program for interpreting a data stream using the shell structure according to the present invention.

## DETAILED DESCRIPTION OF A PREFERRED EMBODIMENT OF THE INVENTION

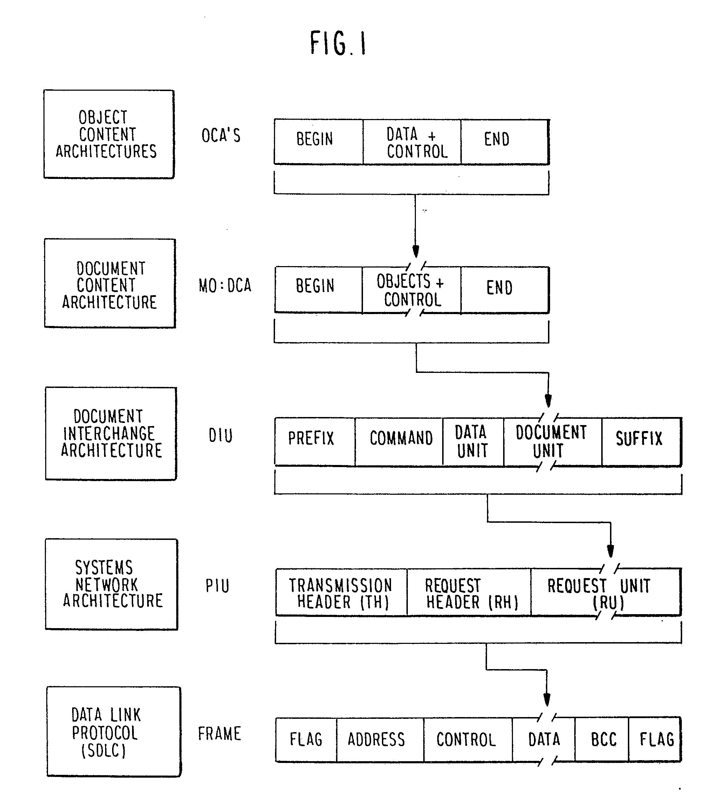

Referring now to the drawings, and more particularly to Figure 1, there is shown a structural overview of the several architectures which define a data stream. The first are the Object Content Architectures (OCAs) which provide the structures and controls for specific data types. Examples are revisable text OCA, which specifies tabs, margins and the like, and image OCA, which specifies resolution, compression algorithms and the like. These OCAs have a data stream structure which have a begin code preceding data and control codes and are terminated with an end code.

The Document Content Architectures (DCAs), of which a specific type called Mixed Object Document Content Architecture (MO:DCA) is a preferred environment of the subject invention, provides among other things page layout and relations between objects. As shown in Figure 1, the OCA data stream is included in the objects plus control part of the DCA data stream. The DCA data stream is, in turn, part of the Document Interchange Architecture which defines a Document Interchange Unit (DIU) data stream. This architecture provides document distribution services, document library services and application processing services. The data stream has a prefix followed by a command code and a data unit code. Then comes the DCA data stream as the document unit. A suffix teminates the DIU data stream.

The Systems Network Architecuture (SNA), as previously described, controls exchange of information between network entities. This architecture defines a Path Information Unit (PIU) data stream which includes a transmission header, a request header and a request unit. The last of these is the DIU data stream. Finally, a data link protocol, such as Synchronous Digital Link Control (SDLC), provides synchronization and error recovery on a data link. The protocol defines a transmission frame which comprises a leading flag, an address, control bits, the data, BCC check bits for error detection, and a trailing flag. The data is the PIU data stream. The general topic of data stream definition and protocols is treated in more detail by R. J. Cypser in Communications Architecture for Distributed Systems, published by Addison-Wesley (1978).

Since the preferred environment for the practice of the present invention is within a mixed object document content architecture, a brief description of this architecture will be provided before describing a specific example of an implementation of the invention. Mixed Object Document Content Architecture (MO:DCA) provides a single interface definition that allows different application programs to interchange objects among each other so that this data can be edited, presented, or manipulated by processes of varying characteristics and intent. MO:DCA provides both a logical and a layout structure for the composition of a document consisting of any of the supported object types. The object types may be, for example, text objects, graphic objects, image objects, table objects, and so forth. Within a single data stream definition, MO:DCA and its data objects may specify both highly revisable and highly unrevisable constructs. Thus, the term "mixed" in MO:DCA refers to both mixed data objects and mixed document constructs. A mixed object document is the collection of resources, data objects and formatting specifications that dictate the processing functions to be performed on the document content. Each component is explicitly defined and delimited. The contents of components are other components and structured fields (i.e., commands). The structured fields in turn are composed of one or more parameters and each parameter provides one value selected from an architecture defined set of values.

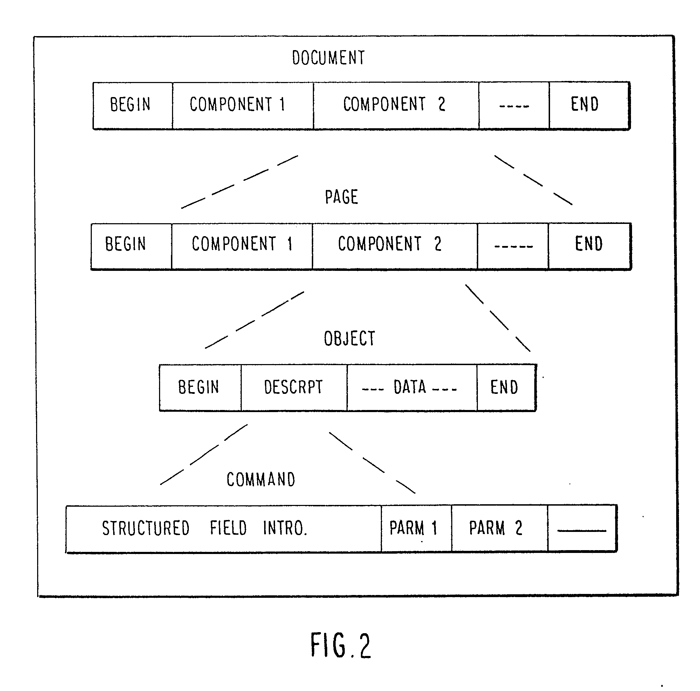

Among the characteristics of the MO:DCA data stream and its associated object content architecture is the hierarchy illustrated in Figure 2 of the drawings. Thus, a document is described by a data stream which comprises a document beginning code followed by a plurality of document components, here labeled components 1, 2, . . ., and ending with an document ending code. One of those document components, say component 2, might be a page which is, in turn, described by that part of the data stream which comprises a page beginning code followed by a plurality of page components, here labeled components 1, 2, . . ., and ending with a page ending code. One of these page components, say component 2, might be an object which is, in turn, described by that part of the data stream which comprises an object beginning code followed by a description of the object, the object data, and finally an object ending code. The object description is a command which is composed of a structured field introduction followed by a plurality of parameters. Thus, the data stream contains an ordered nesting of objects that are made up of structured fields (i.e., commands). Moreover, multiple types of data can appear on a single page, for example, text, image, graphics, and so forth. All function and data comprising a MO:DCA data stream are grouped into logical records called structured fields. These structured fields are in effect "commands" with zero or more parameter fields. All structured fields are contained within a Begin/End pair.

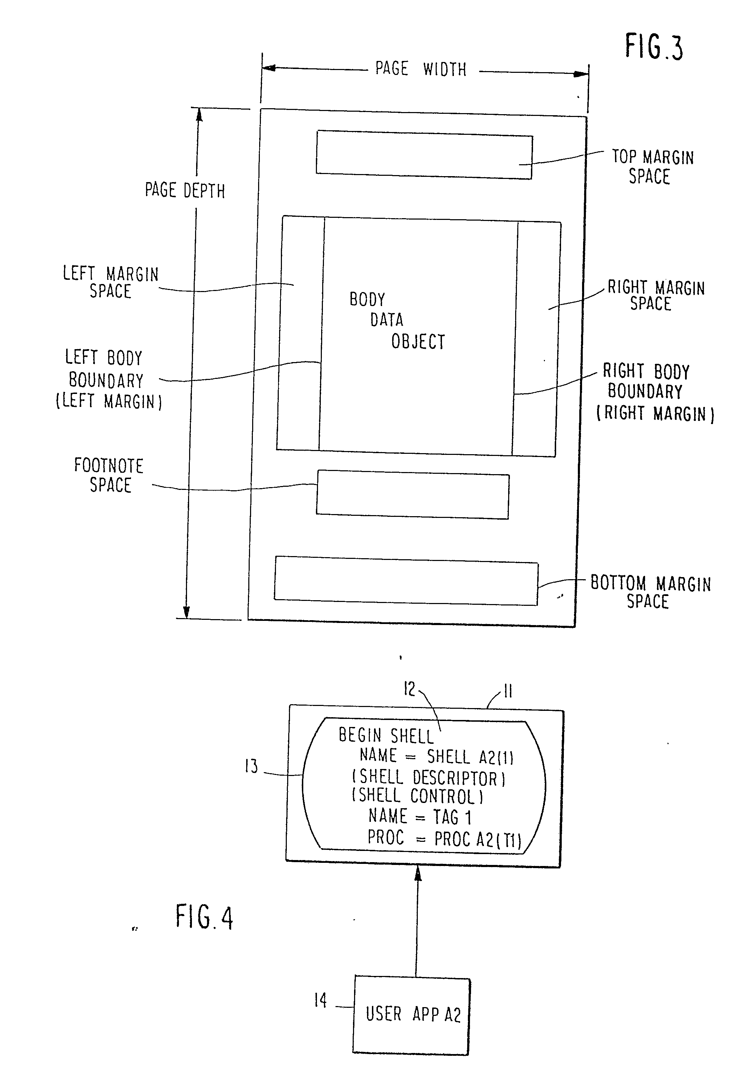

A page of a document contains data objects that are part of a presentation or revisable document that is to be imaged according to a page model description. Figure 3 shows an example of the page elements which may be defined by a page model. Although defined by the model, not all elements need be on every page. The body data object may be of any type, text, graphics, etc., or a mixture of types. Text objects may be in single or multiple columns. A revisable document consists of data and information which directs the presentation of data. The originator does not have to specify the format separately for each section of a document; some aspects of the format can be stated once at the beginning of the document, while other aspects can be stated within the document. The revisable document can also reference resources that are to be used or included with the present document at the time it is transformed into presentation form. A presentation document defines how the data streams that represent documents to be printed or displayed are organized.

The present invention employs Tag Logical Element (TLE) structured fields in the data stream in place of formatting constructs. The TLE can be used to call a macro and pass parameters. The TLE can also be used to begin and end a specific instance of a logical element. When the TLE is used to begin a logical element, e.g., a figure, it may specify one or more attributes, e.g., a frame, for the logical element and a value, e.g., a box, for each attribute. A structured shell at the end user's work station is used to specify how to manage and process TLEs embedded in the data stream. The structured shell is separate from the data stream and may be generated either by the originator of the document or the end user. If generated by the originator, the shell can be transmitted independently of the data stream and stored in any from recognized by the network thereby making it accessible by any work station in the network. If generated by the end user, the shell can be stored locally for use by only the end user. The end user may also modify the shell generated by the originator to customize the shell to satisfy the end user's formatting and processing requirements.

The TLE links constructs in the data stream by referencing named constructs in the shell. The named shell construct specifies the rules, relationships, and formatting information either directly or indirectly that govern the processing and management of the data stream construct containing the reference. Additionally, the TLE is used to associate data content with the tagged construct. Explicit association is possible by providing an internal or external reference to a data object envelope that contains the desired content information, or content generating expression that describes how to determine the desired content information. Implicit association occurs when the data object envelope immediately follows the tagged construct sequentially in the data stream. If the TLE contains a reference to a content generating expression, the expression must be evaluated in order to determine the associated data content. The TLE can also be used to specify one or more attributes and declared values that override, if the end user has not specified otherwise, the specifications in the shell for either itself or for nested tagged constructs. In addition to format descriptors and directives, the syntax of attributes and the set of permitted attribute values can be contained directly in the shell, referenced from the shell, or referenced from the TLE. References from the shell or TLE can be to a macro, procedure, resource object, or other such construct that specifies formatting information. The constructs referenced can be contained in the same shell or in another shell, and they can include references to other contructs. References from the TLE temporarily replace their respective counterparts in the shell. The duration of the replacement equals the duration of the scope of the tagged construct. The scope of the tagged construct is determined by the hierarchical position of the referenced named construct in the shell. The shell is structured like a tree with each named construct being a node in the tree. Nodes are nested, and the nesting level determines a scope for the named construct represented by the node.

For a more detailed understanding of the invention, reference is first made to Figure 4 of the drawings. In this figure, there is illustrated a screen 11 on which is displayed a shell structure 12. The shell structure is being created as part of an application 13 that has been initiated by an operator of a device 14 which is connected to screen 11. The application allows for the creation or modification of the shell structure. Since the shell structure is being created, application 13 has automatically inserted a Begin/End Shell control and has prompted the operator for the shell name. The operator has inserted "ShellA2(1)" after the "name=" prompt. Application 13 provides for an optional shell descriptor and one or more Shell Control or Shell Index components. For each Shell Control component, the operator must provide a construct name, for example, "Tag1" or "TagA". Optionally, the operator can specify formatting directives (e.g., indent five, center, etc.), subordinate construct names and logical and positional relationships, predecessor construct names, presentation attributes and defaults (e.g., Times Roman font), layout information (e.g., horizontal and verical position relative to containing named construct) or processing routines (e.g., REXX procedure to call) for each Shell Control component. A Shell Index component is used to list attribute name/value pairs, default values, subordinates, predecessors and the like for a Shell Control component. A Shell index component is linked to a Shell Control component by a pointer reference. Upon termination, application 13 stores shell structure 12 as specified by the operator.

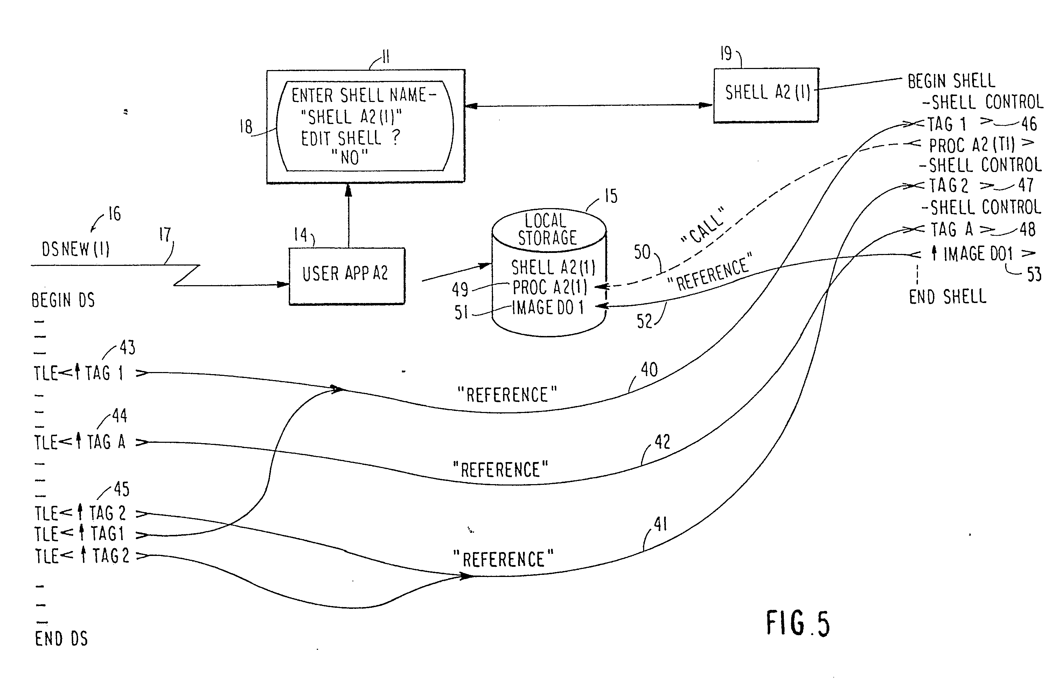

Figure 5 shows "ShellA2(1)" stored in local storage 15. In Figure 5, a data stream 16 on communication link 17 is shown arriving at device 14. After notification of the arrival of data stream 16, the operator of device 14 initiates an application 18 to process the data stream. Application 18, displayed on screen 11, prompts the operator to enter the name of the shell structure to be used in processing the data stream. The operator keys the name "ShellA2(1)" in response to the prompt. "ShellA2(1)" is located in local storage 15 and loaded into memory 19. At this point, the operator is given the option to edit the shell if customization is desired. Since customization is not desired, the operator enters "No" in response to the "Edit Shell?" prompt.

Data stream 16 contains Tag Logical Element (TLE) components which, when encountered by the data stream parsing processor, cause the reference links to the shell to be resolved. Arrowed lines 40, 41 and 42 represent reference links created between tag 43 and shell construct name 46, tag 44 and shell construct name 48, and tag 45 and shell construct name 47. Resolution of the reference link represented by arrowed line 40 causes procedure 49 in local storage 15 to be called. The procedure call is represented by dotted line 50, which is created when the tag processing application retrieves the processing rules and formatting information defined for tag 43 in the shell. Resolution of the reference link represented by arrowed line 42 causes retrieval of image object 51 from local storage 15. Image object 51 is the data content that is associated with tag 44 by the tag processing application. Arrowed line 52 represents the reference link from shell construct 53 to image object 51 that tells the tag processing application what data content is to be associated with the tag.

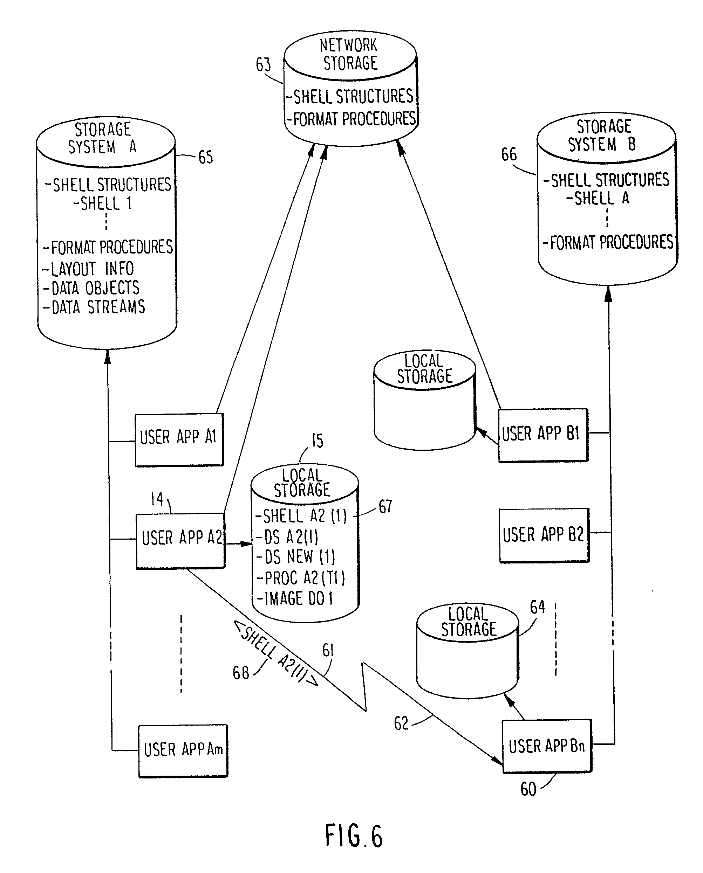

In Figure 6, shell structure 68 is being sent from device 14 to device 60. Shell structure 68 is a copy of shell structure 67, which was created by application 13 in Figure 4. Device 14 is connected to local storage 15, system storage 65 and network storage 63. Device 60 is connected to local storage 64 and system storage 66. Communication link 62 supports the interchange of data between device 14 and device 60. Before placing shell structure 68 on the communication link, a Begin Data Stream control is inserted before the Begin Shell control of shell structure 68 in order to identify the start of the interchange data stream, and an End Data Stream control is inserted after the End Shell control to identify the end of the data stream. The resultant data stream is represented in Figure 6 by data stream 61, which is to be interpreted by device 60 in order to create a shell structure resource to be stored in local storage 64.

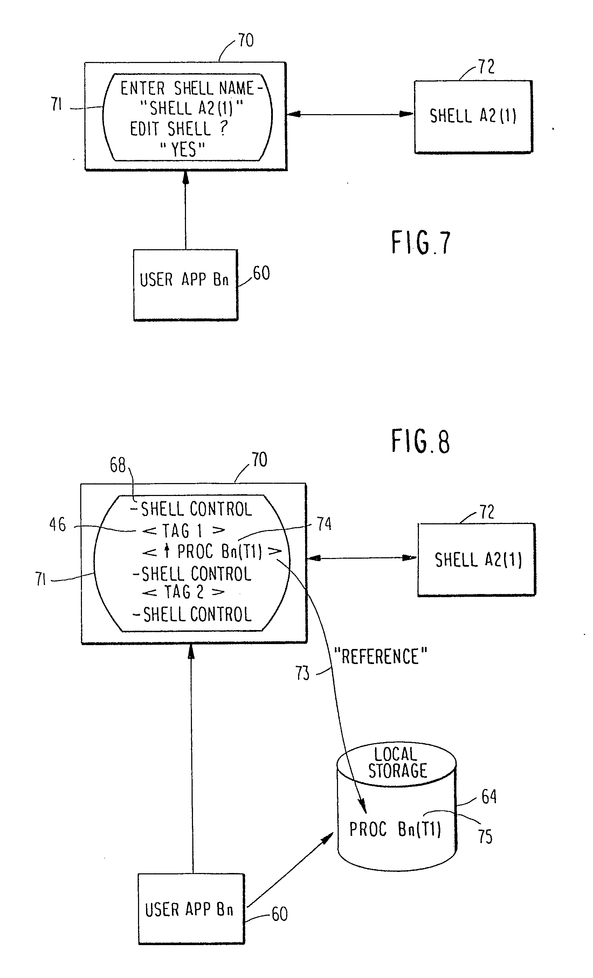

After arrival of the data stream at device 60 in Figure 7, the operator of that device decides that the shell structure needs to be tailored and initiates an application 71 to edit the shell. Application 71, displayed on screen 70, prompts the operator to enter the name of the shell structure. The operator keys the name "ShellA2(1)" in response to the prompt. ShellA2(1) is shown as being resident in memory 72. Since customization of the shell is desired, the operator responds with a "Yes" to the "Edit Shell?" prompt, and application 71 displays the contents of shell structure 68 on screen 70 as shown in Figure 8. The operator chooses to specify that a different procedure be called when a tag referencing shell construct name 46 is encountered in a data stream. To achieve this result, the operator changes the contents of shell control parameter 74 from a reference to procedure ProcA2(T1) to a reference to procedure ProcBn(T1). Arrowed line 73 represents the reference link from shell control parameter 74 to procedure 75 in local storage 64.

EP 0 332 555 A2

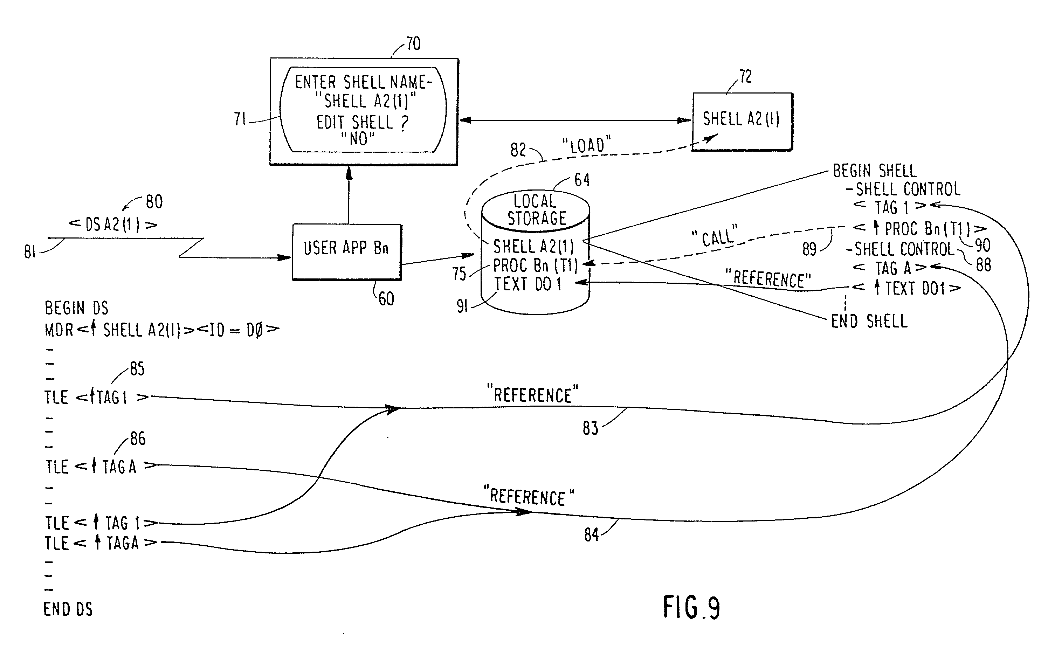

Figure 9 shows a data stream 80 on communication link 81 arriving at device 60. The operator of device 60 asks that application 71 be displayed again on screen 70. Application 71 prompts the operator to enter the name of the shell structure to be used in processing the data stream. The operator keys the name "ShellA2(1)" in response to the prompt. ShellA2(1) is loaded into memory 72 at the request of application 71. Dotted line 82 shows ShellA2(1) being loaded into memory 72. As previously described, the operator is given the option to edit the shell. Since the operator specified his formatting desires during the tailoring process shown in Figure 8, a "No" response is keyed for the "Edit Shell?" prompt.

As in the data stream 16 of Figure 5, data stream 80 contains TLE components which, when encountered, activate reference links to ShellA2(1). Arrowed lines 83 and 84 represent reference links between tag 85 and shell construct name 87 and tag 86 and shell construct name 88, respectively. Resolution of the reference link represented by arrowed line 83 causes procedure 75 in local storage 64 to be called. Dotted line 89 from shell construct parameter 90 represents the call to procedure 75. Text object 91 is the data content associated with tag 86 when reference link 84 is resolved. In Figure 5, the shell construct named Tag1 causes procedure ProcA2(T1) to be called, and the shell construct named TagA is associated with an image object, but because of shell customization by the operator, Tag1 causes procedure ProcBn(T1) to be called, and TagA is now associated with a text object.

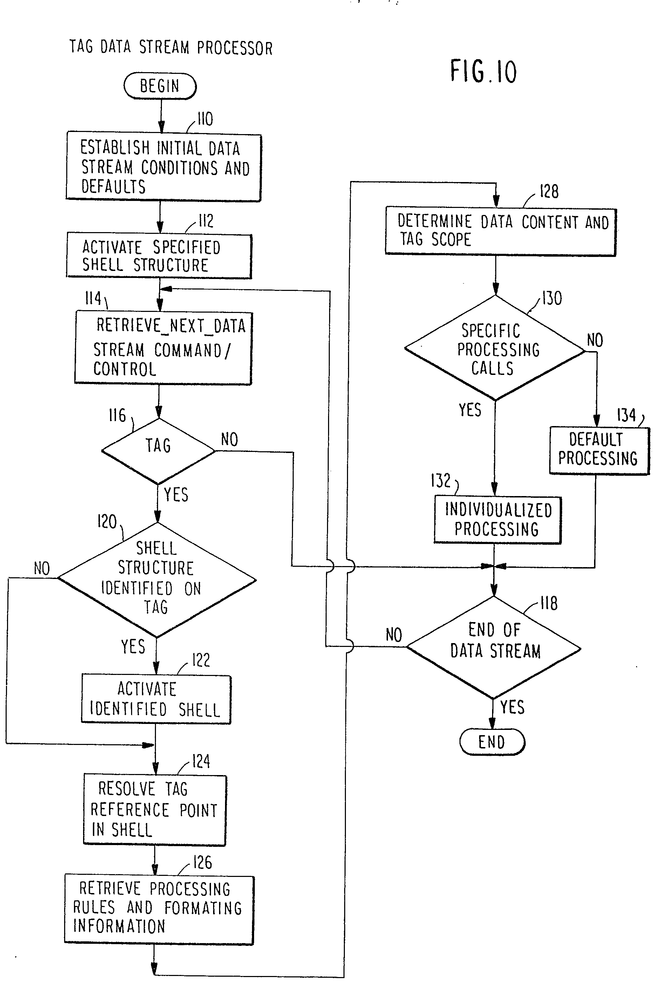

Figure 10 is a flow chart illustrating the logic of a tag data stream processor which is capable of interpreting the TLEs in a data stream and processing the data stream according to the shell. The process begins by establishing the initial data stream conditions in function block 110 and then activating the shell structure in function block 112. The shell structure, if stored within the network, must be accessed and a copy stored at the local work station in order to activate it. Processing of the data steam begins by retrieving the next data stream command or control in function block 114. Each command or control is tested in decision block 116 to determine if it is a tag. If not, a test is made in decision block 118 to determine if this is the end of the data stream, and if not, control loops back to function block 114. When a tag is encountered, a test is made in decision block 120 to determine if the tag identifies a shell structure different from the structure activated in block 112. If so, the identified shell is activated in function block 122 before resolving the tag reference point in the shell in function block 124. If the tag does not identify a different shell structure, control goes directly to function block 124.

When the tag reference point is resolved, the processing rules and formatting information are retrieved from the shell in function block 126. A determination of the content of the data associated with the tag is then made in function block 128. Next, a test is made in decision block 130 to determine if there are specific processing calls in the shell. If so, individualized processing occurs in function block 132; otherwise, default processing occurs in function block 134. Next, the test in made in decision block 118 to determine if the end of the data stream has been reached, and if so, the process ends.

The following is an illustration of an application program useable by a processor in the work station or host computer for using a shell structure to manage the processing of tags in a data stream. This program is in Program Design Language (PDL) from which source and object code are derivable. In the following, it is assumed that the work station is under at least keyboard device control and that the operator, that is the end user, has initiated an application that processes tags embedded in a data stream. The data stream header and initial commands and controls establish the current state environment and provide the identity of the shell structure created to be used to manage processing of embedded tags and to specify formatting of data content associated with the tags.

The existence of a shell tailoring process is also assumed. Through this process, an end user can manage, at the end user's work station, all requirements in terms of formatting contraints and can embed in the shell calls to routines that process information associated with a tag according to the rules defined by the end user instead of by the creator of the data stream containing the embedded tag. The end user has total control over the addition, deletion or modification of formatting attributes (i.e., names, defaults, sets of values), content data (data or resource object containing the data, dynamic content data generating expression), formatting directives (data or resource object descriptors, data stream macros including all parameters and values), processing routines (syntax parsers, externally callable routines to which parameters and values can be passed), and the like. The user interface associated with this shell tailoring process is not of importance to this invention as there are many ways in which the process can be accomplished.

Examples of what is meant by formatting are margin offset, font, alignment, justification, character spacing, clipping, pel spacing, and tab parameters. Content data includes all interchangeable object types such as text, image, graphic, or spreadsheet and expressions that dynamically generate object data upon evaluation. Processing routines include subroutines and functions coded in any procedural or interpretive language available at the end user's work station.

(*Initial data stream conditions have been determined and a shell structure has been identified by the operator or by the establish master environment controls in the data stream. The shell identifier variable (SID) has been set equal to the identified shell structure*)

7

```
Call Activate_Shell(SID)
Repeat
    Call Parse_DStream(SF_Type)
    If SF_Type = Tag
        Then Call Parse_TParms(NSID)
            If NSID not null
                then Call Save_Id(SID)
                        Call Activate_Shell(NSID)


        EndIf
        Call Resolve_Tref(TName, SPtr)
        Call Retrieve_SInfo(SPtr, SParms)
        Call Determine_TContent(TName, TData)
        If SParms contain processing calls
            then Do Individualized Processing
            else Do Default Processing
        EndIf
        Call Trans_Results
    EndIf
Until End_of_DStream
```

After establishing the initial data stream conditions and identifying the shell structure for management of embedded tags, the system calls a routine to activate the shell structure (Call Activate__Shell(SID)). SID is an output parameter that contains the identifier of the shell. Using the SID, the system locates the identified shell structure in local or remote storage, copies the shell structure from storage into memory and returns a handle (pointer) to the memory location of the shell for use by the tag processor. Next, the system calls a routine to parse the data stream (Call Parse__DStream (SF__Type)). The data stream parser locates the starting point in the data stream of all commands and controls. The variable SF__Type is an output parameter used to return the type of the command or control encountered by the parser. If SF__Type is not a tag, the parser uses length information in the command or control header to skip over the content portion of the command or control, thereby locating the next command or control. The entire data stream is similarly parsed until the control specifying the end of the data stream is encountered. At that point, tag processing is concluded.

If SF__Type is a tag, the system calls a routine to parse the parameters of the embedded tag control (Call Parse__TParms(NSID)) checking for the specification of a different shell structure (NSID) to be used to manage the processing of the data stream content contained within the scope (range) of the tag. If NSID is not null (that is, the tag parameter parser has returned a valid shell structure identifier), then the identifier of the current active shell structure (SID) must be saved (Call Save__Id(SID)) in order to be restored when the scope of the tag ends (SID is the identifier of the active shell structure that is saved). After saving the currently active shell structure, the system calls the Activate__Shell routine to activate the shell structure identified by NSID.

Although not explicitly set forth in this description of the invention, a shell structure can reference other shell structures. This situation causes a linked list of shell structure identifiers to be traversed in order to retrieve modifications to be applied to the last referenced shell structure (e.g., the shell structure identifier at the end of the list) thereby creating a new shell structure. For this case, a more complex data structure, such as an array, singly or doubly linked list, stack, or the like, would be required in order to reactivate the saved shell identifiers in the correct order.

After activation of the shell structure, the system calls a routine to resolve the tag pointer reference to a location in the shell (Call Resolve__ TRef(TName, SPtr)). The input to this routine is the tag name (TName), and the output is a pointer (SPtr) to the location in the shell being referenced by the tag name (TName). After resolving the tag reference, the system calls a routine to retrieve the processing rules and formatting information from the referenced location (SPtr) in the shell (Call Retrieve__SInfo(SPtr, SParms)). The processing rules and formatting information are returned in the SParms data structure. The format of the data in SParms is variable; it can be attribute name/value pairs (e.g., rmargin 10, lmargin 72 (set the right margin to 10 and the left margin to 72)), names of resource objects stored in the system in an architected format that contain processing rules and/or formatting information, or calls to subroutines and functions that can be executed by the system in the context defined by the tag data stream processing application.

Another routine is called to determine the scope of the tag (TName) in the data stream (Call Determine__TContent(TName, TData)). The tag scope is determined by the element hierarchy defined in the shell structure and applies to all data stream commands and controls occurring between TName and the next tag in the data stream. TData is the structure used to contain information about the commands and controls included in the tag scope.

Next, if SParms contains processing routines, those routines are called by the system, and the formatting directives are applied to the data stream controls and commands within the scope of the tag (TData). If the shell has been tailored, then the processing routine and formatting directives executed are those specified by the end user. If the shell has not been tailored, then the processing routines and formatting directives executed are those specified by the data stream creator.

At this point, the formatted data must be transformed into the final form required by the application program calling the tag data stream processor. The final form is either for an interactive display, a printer, or a stored file. The routine (Trans__Results) is called to transform the data into a display format, such as the 3270 data stream, a printer format, such as postscript or a stored format such as an interchange data stream.

One of the advantages of this invention is that transmission efficiency is improved in an interchange environment. The information and instructions specified by the shell structure do not have to be duplicated and contained within the data stream for transmission in the system network. The data stream is less cluttered.

A second advantage is that the shell structure and data stream can be created by separate application programs. The application that builds the data stream is knowledgeable of the shell and insures that the data stream tagged constructs are related to the appropriate named constructs in the shell so that the internal consistency of the data stream can be maintained whenever the data stream needs to be modified. The intelligence for managing the data stream is part of the application that processes the shell.

Another advantage of the invention is that the creation within the data stream of additional tagged constructs is facilitated. The application that processes and manages the shell can create, modify and replace any of the tagged constructs in the data stream prior to inputing the data stream into an application, such as an editor, for further processing.

While the invention has been described in terms of a single preferred embodiment, those skilled in the art will recognize that the invention can be practiced with modification within the spirit and scope of the appended claims.

## Claims

1. A method of flexibly managing a data stream processed and transmitted on a network in a manner that allows a high degree of flexibility in passing document data and formatting information from one application program to another yet results in a significant reduction in data stream clutter, said method comprising the steps of:
creating a formatting shell;
embedding tags in a data stream to said shell; and
processing said data stream by accessing said shell when tags are detected in the data stream.

2. The method according to claim 1 wherein the step of creating a formatting shell is performed by an originator of the data stream and further comprising the step of tailoring the formatting shell for use by an end user.

3. The method according to claim 1 wherein the step of creating a formatting shell is perfomed by an end user independent of the data stream.

4. The method according to claim 1 further comprising the step of separately transmitting said formatting shell and said data stream.

5. The method according to claim 1 further comprising the step of storing the formatting shell in a form recognized by the network.

6. The method according to claim 1 wherein the step of creating a formatting shell includes embedding processing calls in said shell.

7. A method of transmitting, managing and processing of data stream constructs independent of an application program which generated the data stream comprising the steps of:
generating a data stream for transmission from an originating station to a receiving station;
creating at the originating station a shell containing processing calls as part of the step of generating said data stream, said data stream having embedded therein tags to said processing calls;
separately transmitting said data stream and said shell to said receiving station;
processing said data stream at said receiving station to detect said tags;

retrieving processing calls identified by said tags from said shell; and

processing said data stream according to the retrieved processing calls.

8. The method according to claim 7 further comprising the step of customizing said shell at the receiving station by substituting, modifying or inserting processing calls for certain of said tags in said shell.

9. The method according to claim 8 wherein the step of customizing said shell is performed by the steps of:

presenting a user at the receiving station with the option of editing said shell;

in response to a user selected option to edit said shell, displaying said shell and recording editing inputs from the user; and

upon completion of an editing process by the user, storing the customized shell.

10. A method of managing and processing of data stream constructs in a data processing system which permits a high degree of flexibility in passing document data and formatting information from one application program to another comprising the steps of:

using a first application program and generating a data stream describing a document, said data stream including embedded formatting tags;

separately creating a shell of processing calls associated with by said formatting tags; and

using a second application program and processing said data stream by detecting said embedded formatting tags and accessing said processing calls from said shell.

11. The method according to claim 10 wherein the step of creating said shell is performed using said first application program.

12. The method according to claim 10 wherein the step of creating said shell is performed using said second application program.

13. The method according to claim 10 wherein the step of creating said shell is performed using said first application program and further comprising the step of customizing said shell using said second application program to edit said shell by substituting, modifying or inserting processing calls in said shell.

14. The method according to claim 10 further comprising the step of storing said shell in a storage device recognized by the system and wherein said second application accesses said processing calls from said storage device.

15. The method according to claim 10 wherein the step of creating is performed using said first application program and further comprising the step of separately transmitting said data stream and said shell to said second application program.

16. The method according to claim 15 further comprising the step of customizing said shell using said second application program by editing said shell to substitute processing calls.

# FIG.1

| OBJECT CONTENT ARCHITECTURES | OCA'S | BEGIN | DATA + CONTROL | END | | |
|---|---|---|---|---|---|---|

| DOCUMENT CONTENT ARCHITECTURE | MO:DCA | BEGIN | OBJECTS + CONTROL | END | | |
|---|---|---|---|---|---|---|

| DOCUMENT INTERCHANGE ARCHITECTURE | DIU | PREFIX | COMMAND | DATA UNIT | DOCUMENT UNIT | SUFFIX |
|---|---|---|---|---|---|---|

| SYSTEMS NETWORK ARCHITECTURE | PIU | TRANSMISSION HEADER (TH) | REQUEST HEADER (RH) | REQUEST UNIT (RU) | | |
|---|---|---|---|---|---|---|

| DATA LINK PROTOCOL (SDLC) | FRAME | FLAG | ADDRESS | CONTROL | DATA | BCC | FLAG |
|---|---|---|---|---|---|---|---|

FIG.2

FIG.3

PAGE WIDTH

PAGE DEPTH

TOP MARGIN
SPACE

LEFT MARGIN
SPACE

BODY
DATA
OBJECT

RIGHT MARGIN
SPACE

LEFT BODY
BOUNDARY
(LEFT MARGIN)

RIGHT BODY
BOUNDARY
(RIGHT MARGIN)

FOOTNOTE
SPACE

BOTTOM MARGIN
SPACE

BEGIN SHELL
    NAME = SHELL A2(1)
    (SHELL DESCRIPTOR)
    (SHELL CONTROL)
    NAME = TAG 1
    PROC = PROC A2(T1)

USER APP A2

FIG.4

FIG.5

EP 0 332 555 A2

FIG.6

FIG.7

FIG.8

FIG.9

EP 0 332 555 A2

FIG.10

TAG DATA STREAM PROCESSOR

BEGIN

110
ESTABLISH INITIAL DATA STREAM CONDITIONS AND DEFAULTS

112
ACTIVATE SPECIFIED SHELL STRUCTURE

114
RETRIEVE_NEXT_DATA STREAM COMMAND/ CONTROL

116
TAG
NO
YES

120
SHELL STRUCTURE IDENTIFIED ON TAG
NO
YES

122
ACTIVATE IDENTIFIED SHELL

124
RESOLVE TAG REFERENCE POINT IN SHELL

126
RETRIEVE PROCESSING RULES AND FORMATING INFORMATION

128
DETERMINE DATA CONTENT AND TAG SCOPE

130
SPECIFIC PROCESSING CALLS
NO
YES

134
DEFAULT PROCESSING

132
INDIVIDUALIZED PROCESSING

118
END OF DATA STREAM
NO
YES

END